# EUROPEAN PATENT SPECIFICATION

(11) **EP 2 327 573 B1**
(45) Date of publication and mention of the grant of the patent: **17.10.2012**
(21) Application number: 09425471.1
(22) Date of filing: 18.11.2009
(51) Int. Cl.: B60G 7/00, B60G 21/05

(54) **Modular monolithic packet-shaped trailing arm for rear twist-beam axle with applications on front-wheel or rear-wheel drives**
Modular monolithischer Längslenker für eine Verbundlenkerachse, verwendbar für Vorder- und Hinterradantrieb
Bras d'essieu modulaire monolithique pour un essieu souple arrière utilisable pour traction avant ou roue motrice arrière

(43) Date of publication of application: 01.06.2011
(73) Proprietor: Fiat Group Automobiles S.p.A., 10135 Torino (TO) (IT)
(72) Inventor: Messina, Alessandro, 10135 Torino (IT); Pavesio, Carlo, 10135 Torino (IT)
(74) Representative: Di Gennaro, Sergio

(56) References cited:
- WO-A1-2007/066205
- FR-A3- 2 918 605
- JP-A- 11 115 430
- JP-A- 2000 335 219
- US-A- 5 673 929

## Description

The subject of the invention is a modular monolithic packet-shaped longitudinal arm or trailing arm for rear twist-beam axle with applications on front-wheel or rear-wheel drives.

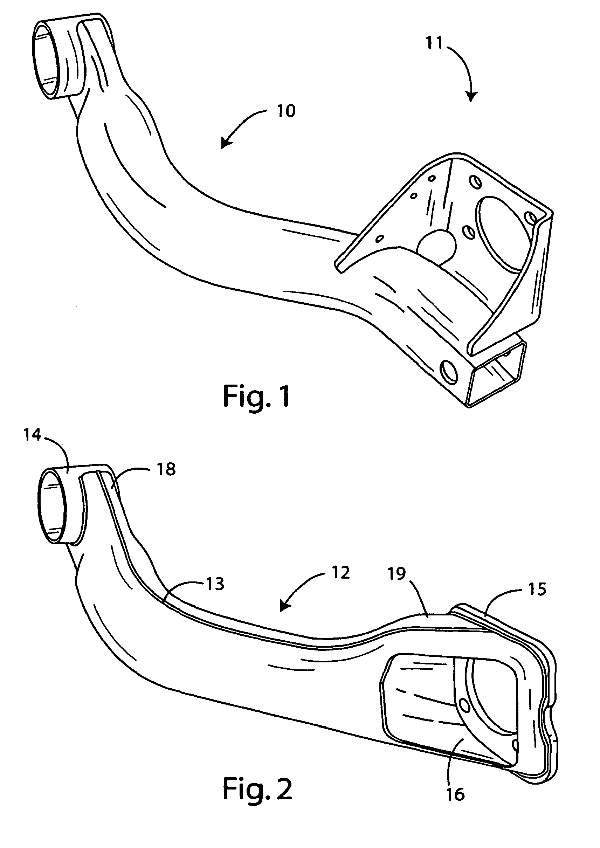

Current solutions, such as the one illustrated in Figure 1, for motor vehicles with twist-beam-axle rear suspension on rear-wheel-drive (RWD) configurations or front-wheel-drive (FWD) configurations envisage trailing arms made of metal plate 10 with applied brackets 11 designed to enable application of the side wheel assembly (steering knuckle, hub, etc.) and of the passage of the rear transmission (where envisaged).

The current solutions do not present particular three-dimensional constraints of shape on the design as a function of the process, whereas they suffer from the potential limits of modularity and unification of the equipment.

The purpose of the invention is to provide a solution that envisages integration of the function of the trailing arm plus applied bracket in a monolithic trailing arm (closed on itself and welded) having a particular modular shape (defined as "packet" shape), such as to enable application of the side wheel assembly (steering knuckle, hub, etc.) and the possible passage of the transmission.

This solution is able to determine three-dimensional constraints such as to enable their design as a function of the process (but without being tied down to a given type of process), using the maximum benefit in a perspective of modularity according to design and unification of process equipment for different motor vehicles and uses (RWD - FWD). Furthermore, this solution, given the same performance of suspensions, leads to a considerable saving in terms of weight, a simplification of design and process, a considerable and simplified potential of modularity (in addition to the possibility of standardizing the trailing arm in the configurations RWD and FWD, hence rendering it very attractive from these points of view as compared to any other alternative solution.

Once again the solution proposed by the invention presents a geometry such as to allow the trailing arm to work aligned with the loads coming from the wheel (higher performance in terms of fatigue and stiffness), unlike the solution with applied bracket that determines a high state of stress in the welds between arm and bracket, as a result of the overall geometry.

The design of the packet-shaped trailing arm according to the invention is made so as to develop a process that will make it possible to obtain, with the sole modification of the parameters of bending or shearing (envisaged at the end of the process), different locations of the characteristic geometrical points of the suspension (hence modifying the kinematic and structural behaviour thereof given the same track and wheel base), applications of rear transmissions, different values of track and wheel base, and provision of RH or LH trailing arms on a single piece of process equipment.

The possible application of the front bushing via drive fit can afford the additional advantage of further reducing the costs, reducing stocking and equipment, in so far as the process envisages insertion of the front bushing on the trailing arm prior to the operations of bending and shearing that define the specific application (RH-LH arm, motor vehicle, geometry, etc.).

It has been found that, given the same perimeter (complete rear suspension) the packet-shape solution enables a saving of approximately 3 kg with respect to the solution arm + applied bracket.

For the above and further purposes that will emerge more clearly understandable hereinafter, the purpose of the invention is to provide a modular monolithic packet-shaped trailing arm for the rear twist-beam axle of a motor vehicle, characterized in that it is constituted by a metal plate bent to form a cornet shape welded longitudinally along its opposite edges that face one another following upon bending, the metal plate being shaped so that, once bent and welded, it defines a substantially circular hollow central portion, from which there extend squeezed ends, one of which is provided with a bushing for fixing to the structure and the other with a through hole for fixing of the transmission.

The invention will now be described with reference to the attached drawings, wherein:
Figure 1 illustrates an example of trailing arm plus applied brackets of a known type;
Figure 2 illustrates an example of modular monolithic packet-shaped trailing arm according to the invention;
Figure 3a illustrates a modular monolithic packet-shaped trailing arm according to the invention with parallel profile in XY view;
Figure 3b illustrates a modular monolithic packet-shaped trailing arm according to the invention with variable profile in XZ view;
Figures 4a-4b, 5a-5b, 6a-6b are sections in different stretches and different orientations of the arm according to the invention;
Figure 7 is an example of application of modular monolithic packet-shaped trailing arm according to the invention on a suspension without rear-wheel drive and with half-track of value "X".
Figure 8 is an example of application of a modular monolithic packet-shaped trailing arm according to the invention on a suspension with rear-wheel drive and half-track of value "X+30 mm", obtained via a linear modular modification;
Figures 9 and 10 are a comparison between the monolithic arm of the invention and that of a known motor vehicle.

The invention regards a modular monolithic trailing arm 12 for rear twist-beam axle, designed for being implemented via a non-binding process (hydroforming, rolling, progressive stamping, etc.) but dimensionally conceived so as to enable the arm itself to be obtained according to different geometrical configurations (wheel base, track, suspension geometries, etc.). In addition, the arm is provided so as to accommodate the fixing components and braking system (thanks to the integration of the function of the applied bracket present in the known solutions), in addition to the possible application of the transmission FWD without additional brackets with specific characteristics.

The arm 12 is constituted by an appropriately configured metal plate bent to form a cornet shape so as to form the arm 12 in its definitive configuration; the metal plate is welded in 13 longitudinally along its free edges.

In the attached figures, the weld is illustrated performed by setting the free edges against one another, but it is understood that the weld may also be obtained by partially overlapping the edges themselves or in any other way and with any other extension along the axial profile of the cornet shape in the three dimensions that may be deemed suitable to optimize the state of stress present in conditions of operation both on the metal plate and on the welds.

The arm has a hollow main central portion 17, of a substantially circular shape.

Welded in a known way at its squeezed (front) end 18 is a bushing 14 for fixing to the structure, and fixed at the other (rear) end 19 is a perforated flange 15 for enabling passage of the transmission through the flange and a corresponding through hole 16 made in the end of the arm.

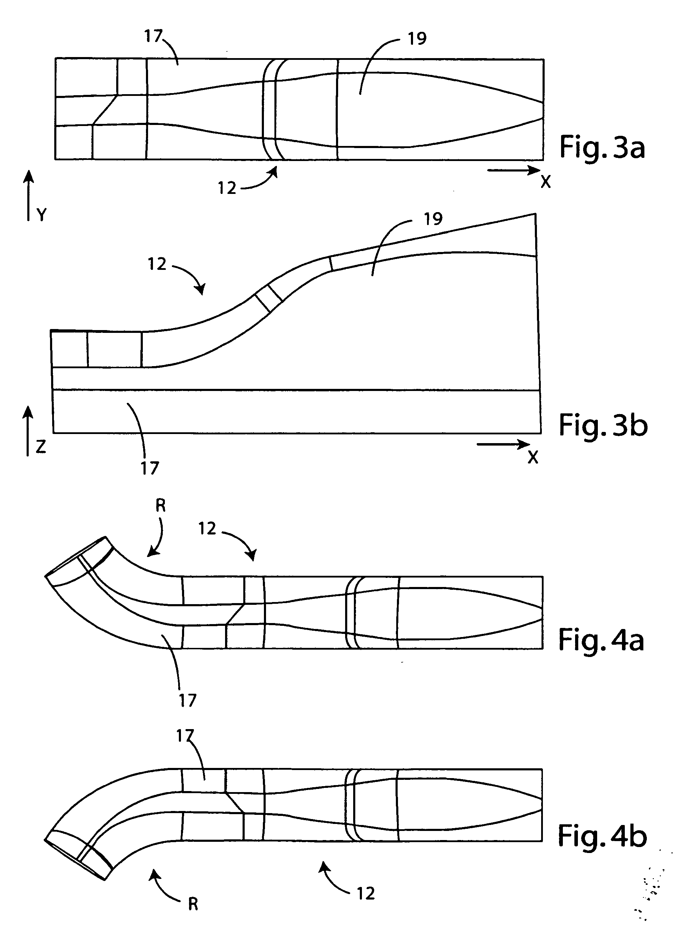

The innovative aspect of the invention lies in the "design to process" obtained by imposing on the design a constraint of parallelism between two profiles of construction of the arm along one axis (for example, the dimension Y along the axis X), defining as variable the dimension of the item along the third axis (Z), which combines a known and constrained geometry (XY view of the arm in Fig. 3a) with a variable geometry (XZ view in Fig. 3b), unlike the known art where the object is completely constrained on three axes X, Y and Z, such as, for example, a sectional element, or else is completely free on three axes, such as for example an element obtained at the press.

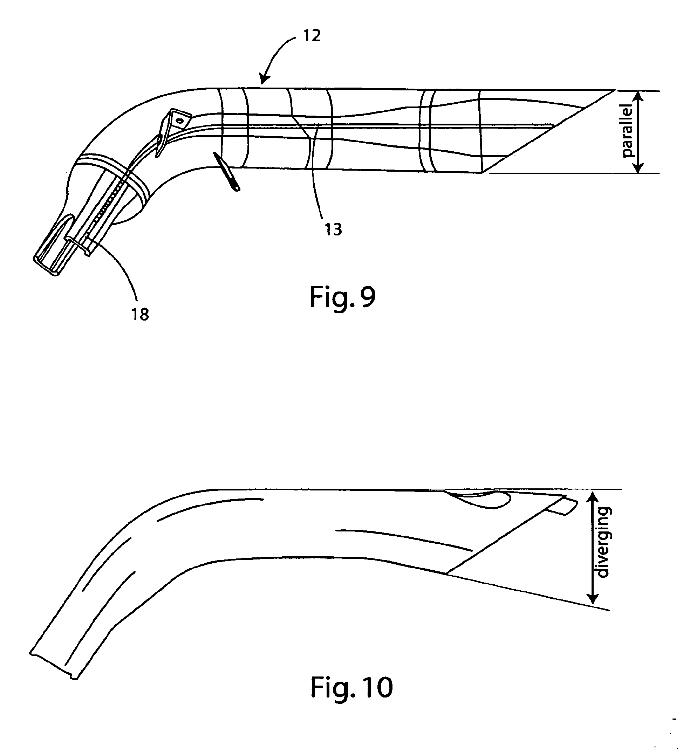

Shown by way of example in Figures 9 and 10 is a comparison between the solution of the invention (Figure 9) with parallel profile (view corresponding to that of Figure 3a) and a known solution (Figure 10), such as for example the monolithic arm with variable profile (i.e., divergent) of Toyota Yaris. The subsequent specificity of the arm as a function of the location of the characteristic points of the suspension is managed linearly with process activities (operations of trimming or variable bending) that enable modular application on different motor-vehicle geometries, with unification thereof on a single piece of process equipment (with consequent reduction of equipment, occupation of warehouse, dies, management costs, etc.).

The radius r of bending (see Figs. 4a-4b) defines the characteristic geometrical point of location of the front bushing of the rear suspension.

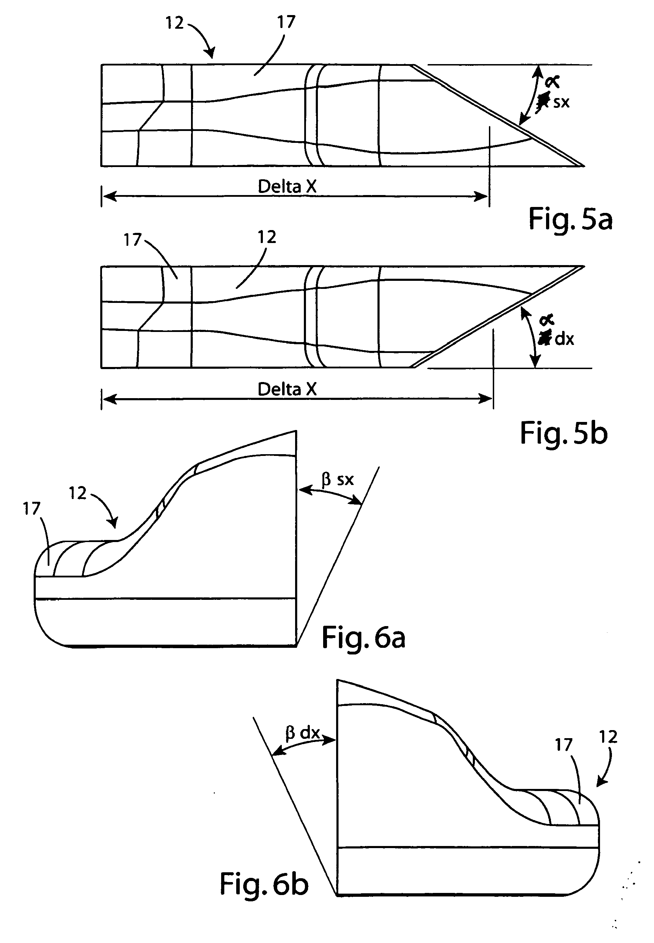

The location along the longitudinal axis Delta x of the rear shearing (see Figs. 5a-5b) can determine wheel base and half-track of the vehicle suspension. The angle α sx and the angle α dx, with respect to the longitudinal axis, of the rear shearing (see Figs.5a-5b can determine the semi-convergence of the vehicle suspension.

The angle β sx and the angle P dx, with respect to the perpendicular to the longitudinal axis of the rear shearing (see Figs. 6a-6b) can determine the camber of the vehicle suspension.

The end product constitutes from a visual point of view a completely new concept different from the known art, characterized by the regular and parallel profile in plan view, with the possibility of maintaining linearly modular coupling profiles in the area of the rear shearing and variable geometries in the area of front bending.

The result is that the modular monolithic packet-shaped trailing arm responds to the specific requirements of application by adapting the design as a function of a linear process (and not a three-dimensional one as in the known art), by managing the specificities and modularity with a simplicity and speed of execution such as to render it more attractive from these points of view as compared to any other alternative solution.

An evident advantage of this structure is that the joining welds between the arm 12 and the applied flange 15 (which are usually subject to considerable stress during operation of the suspension), in the proposed solution are not critical, since the arm is a monolithic element in which the closing weld can be positioned in an area that is neutral with respect to the stress to which the arm is subject in use, thus increasing the reliability of the solution.

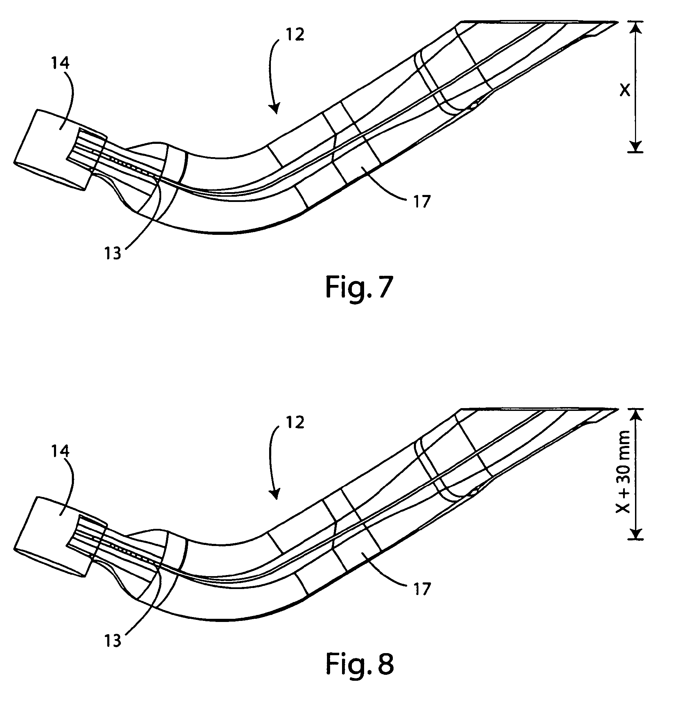

Figure 7 is an example of embodiment of the modular monolithic packet-shaped trailing arm according to the invention on a suspension without rear-wheel drive and with half-track of value "X".

Figure 8 is an example of embodiment of the modular monolithic packet-shaped trailing arm according to the invention on a suspension with rear-wheel drive and half-track of value "X+30mm", obtained with a linear modular modification.

The possibility of managing in a monolithic member the longitudinal part of the twist-beam-axle suspension enables reduction of the geometrical tolerances, unlike a known solution where the dimensional tolerances are the consequence of the sum of a number of objects with their respective tolerances.

The geometrical shape of the packet-shaped monolithic arm enables reduction in the amount of swarf, with consequent advantage in terms of weights and costs. The possibility of varying as desired the height of the volume of the cross section of the arm, optimizing the available space for lay-out constitutes an important opportunity for achieving/optimizing the performance in terms of stiffness in regard to the vertical loads on the suspension; considering that some countries (for example, the U.S.A.) require specific tests for approval on vertical loads, rendering the proposed solution very interesting from this standpoint as compared to any other alternative known solutions. The closed section, which can vary as desired along the axis of the trailing arm as a function of the configuration offers from a structural standpoint the intrinsic advantage of a stiffness in regard to torsion and bending that is variable along the axis so as to distribute appropriately the stress determined by the conditions of operation of the twist-beam axle. The result is that an appropriate modelling of the volumes can shift critical states of stress from one area to another of the arm, distributing them or removing them from areas of joining with other objects (for example, the area of coupling of the torsion bar or spring plate).

This fact constitutes another reason for reliability of the packet-shaped arm as compared to known solutions because it frees the design from process conditions that can trigger off cracks and/or failures.

This latter feature integrates the concept of linear modularity determined by design to process, with the consequence of being able to intervene at any moment on the process in a fast, effective, simple (linear) way and consequently at a low cost, as a function of the suspension geometries, the suspension behaviour on the vehicle, and the synergies between vehicles and segments of vehicles, eliminating the usually very long times for the modifications necessary for setting-up in the case of known solutions.

As has been said, the current solutions present a series of negative aspects, which are brilliantly solved by the concept of modular monolithic packet-shaped trailing arm and can be summarized as follows:
- larger number of dies and objects to be subjected to sheet-metal working;
- greater weight;
- higher cost;
- reliability markedly linked to the process;
- minimum variability of the design as a function of the state of stress;
- minimum modularity of design and process as a function of different applications; and
- minimum variability of choice of the process as a function of the design.

## Claims

1. A modular monolithic packet-shaped trailing arm for the rear twist-beam axle of a motor vehicle, which is constituted by a metal plate (12) bent to form a cornet shape and welded (13) longitudinally along its opposite edges that face each other following upon bending; the metal plate being shaped so that, once bent and welded, it defines a substantially circular hollow central portion (17) having squeezed ends, one of which (18) is provided with a bushing (14) for fixing to the structure and the other end (19) is provided with a through hole (16) for fixing of the transmission **characterized in that** the other end of the arm has a constraint of parallelism; between two profiles of construction along a longitudinal dimension Y along the axis X, whilst its dimension along the third axis Z with respect to the axis X is variable.

2. The arm according to Claim 1, **characterized in that** the radius (r) of bending of the one end (18) provided with the bushing (14) defines the characteristic geometrical point of location of said front bushing (14) of the rear suspension.

3. The arm according to Claim 1, **characterized in that** the location along the longitudinal axis (Delta x) of the rear shearing of the arm (12) determines the wheel base and half-track of the motor-vehicle suspension.

4. The arm according to Claim 1, **characterized in that** the angle (α sx and α (dx) with respect to the longitudinal axis (X) of the rear shearing of the arm (12) determines the semi-convergence of the motor-vehicle suspension.

5. The arm according to Claim 1, **characterized in that** the angle (β sx and β dx) with respect to the perpendicular to the longitudinal axis (X) of the rear shearing of the arm (12) determines the camber of the motor-vehicle suspension.

## Patentansprüche

1. Modulare, monolithische, paketförmiger Längslenker für die hintere Verbundlenkerachse eines Kraftfahrzeugs, die aus einer Metallplatte (12) besteht, die gebogen ist, um eine Trichterform zu bilden, und die längs entlang ihren entgegengesetzten Kanten, die einander nach dem Biegen gegenüberliegen, geschweißt (13) ist; wobei die Metallplatte derart geformt ist, dass sie, sobald sie gebogen und geschweißt ist, einen im Wesentlichen kreisförmigen hohlen Abschnitt (17) bildet, der gequetschte Enden hat, von welchen eines (18) mit einer Hülse (14) zum Befestigen der Struktur versehen ist, und das andere Ende (19) mit einer durchgehenden Öffnung (16) zum Befestigen des Antriebsstrangs versehen ist, **dadurch gekennzeichnet, dass** das andere Ende des Längslenkers eine Verengung der Parallelität zwischen zwei Bauprofilen entlang einer Längsachse hat, das heißt, Maß Y entlang der X-Achse, während sein Maß entlang der dritten Z-Achse in Bezug zu der X-Achse veränderlich ist.

2. Längslenker nach Anspruch 1, **dadurch gekennzeichnet, dass** der Radius (r) der Biegung des einen Endes (18), das mit der Hülse (14) versehen ist, die charakteristische geometrische Lage der vorderen Hülse (14) der rückwärtigen Aufhängung definiert.

3. Längslenker nach Anspruch 1, **dadurch gekennzeichnet, dass** die Lage entlang der Längsachse (Delta x) der rückseitigen Scherung des Längslenkers (12) die Radbasis und Halbspur der Kraftfahrzeugaufhängung bestimmt.

4. Längslenker nach Anspruch 1, **dadurch gekennzeichnet, dass** der Winkel (αsx und αdx) in Bezug zu der Längsachse (X) der hinteren Scherung des Längslenkers (12) die Halbkonvergenz der Kraftfahrzeugaufhängung bestimmt.

5. Längslenker nach Anspruch 1, **dadurch gekennzeichnet, dass** der Winkel (βsx und βdx) in Bezug zu der Senkrechten zu der Längsachse (X) der hinteren Scherung des Längslenkers (12) die Wölbung der Kraftfahrzeugaufhängung bestimmt.

## Revendications

1. Bras d'articulation monolithique modulaire en forme de paquet pour un essieu à borne de torsion arrière d'un véhicule motorisé qui est constitué d'une plaque métallique (12) cintrée pour prendre la forme d'un cornet et soudée (13) longitudinalement le long de ses bords opposés qui se font face à la suite du cintrage ; la plaque métallique étant formée de telle sorte que, une fois cintrée et soudée, elle définit une portion centrale creuse sensiblement circulaire (17) ayant des extrémités écrasées, dont l'une (18) est munie d'une douille (14) pour la fixation à la structure et l'autre extrémité (19) comporte un trou traversant (16) pour la fixation de la transmission,
**caractérisé en ce que** l'autre extrémité du bras a une contrainte de parallélisme entre deux profils de construction le long d'un axe longitudinal X, à savoir la dimension Y le long de l'axe X, alors que sa dimension le long du troisième axe Z par rapport à l'axe X est variable.

2. Bras selon la revendication 1, **caractérisé en ce que** le rayon (r) de courbure de l'extrémité (18) munie de la douille (14) définit le point de localisation géométrique caractéristique de ladite douille avant (14) de la suspension arrière.

3. Bras selon la revendication 1, **caractérisé en ce que** l'emplacement le long de l'axe longitudinal (Delta x) du cisaillement arrière du bras (12) détermine l'empattement et la demi-voie de la suspension du véhicule motorisé.

4. Bras selon la revendication 1, **caractérisé en ce que** l'angle (αsx et αdx) par rapport à l'axe longitudinal (x) du cisaillement arrière du bras (12) détermine la semi-convergence de la suspension du véhicule motorisé.

5. Bras selon la revendication 1, **caractérisé en ce que** l'angle (βsx et βdx) par rapport à la perpendiculaire à l'axe longitudinal (x) du cisaillement arrière du bras (12) détermine le carrossage de la suspension du véhicule motorisé.
